# EUROPÄISCHE PATENTSCHRIFT

(11) **EP 2 886 493 B1**
(45) Veröffentlichungstag und Bekanntmachung des Hinweises auf die Patenterteilung: **12.10.2016**
(21) Anmeldenummer: 14196379.3
(22) Anmeldetag: 04.12.2014
(51) Int. Cl.: B65G 1/04, B65G 1/137

(54) **Lager mit Fluggeräten und entsprechendes Verfahren**
Warehouse with drones and corresponding method
Entrepôt avec drones et procédé correspondant

(30) Priorität: 04.12.2013 DE 102013113452
(43) Veröffentlichungstag der Anmeldung: 24.06.2015
(73) Patentinhaber: Telejet Kommunikations GmbH, 61462 Königstein (DE)
(72) Erfinder: Schulze, Max, 61479 Glashütten Oberems (DE); Jeschke, Dr. Klaus, 65779 Kelkheim (DE)
(74) Vertreter: Weickmann & Weickmann PartmbB

(56) Entgegenhaltungen:
- WO-A1-2005/118436
- CN-U- 203 269 096
- DE-A1-102010 009 323
- US-B2- 8 453 962

## Beschreibung

### I. Anwendungsgebiet

Die Erfindung betrifft ein Lager und ein entsprechendes Verfahren, in dem die Produkte chaotisch eingelagert werden und deren Lagerpositionen nur dem Zentralrechner bekannt ist.

### II. Technischer Hintergrund

Solche Lager sind in vielen Varianten bekannt.

Eine sehr häufige Variante ist ein so genanntes Hochregallager, bei dem beidseits eines Ganges, in dem ein Regalbediengerät (RBG) horizontal und vertikal verfährt, Lagerungsgestelle aufgebaut sind, in der die Produkte auf einheitlichen Trays oder Paletten abgestellt und eingelagert werden und vom RBG sowohl ein- als auch ausgelagert werden können.

Zum einen sind dabei die Abmessungen des einzelnen Lagerplatzes fest vorgegeben, zum anderen ist das Lagergestell häufig nur eine Lagerposition tief, da eine größere Tiefe nur dann sinnvoll ist, wenn z. B. gleichartige Produkte in derselben Reihe hintereinander eingelagert sind, da das RBG nur das vorderste gelagerte Tray oder Palette einer Reihe ergreifen kann.

Wegen der Zentralsteuerung ist das teuerste mechanische Einzelteil eines solchen z. B. Hochregallagers das RBG. Deshalb und aus Kollisionsgründen ist in einem Hochregallager pro Gang nur ein RBG vorhanden, was die Einund Auslagerungszeit für die Produkte nicht unter ein systembedingtes Minimum absinken lässt.

Daneben sind Flächenlager - z. B. in Apotheken - bekannt, die ebenfalls als Hochregallager ausgebildet sein können, bei denen die Produkte insbesondere direkt, also nicht auf Trays oder Paletten liegend, auf einer körperlich möglichst wenig unterteilten Lagerfläche abgelegt werden, wiederum beispielsweise in Etagen übereinander rechts und links eines Ganges für ein Regalbediengerät, und vom RBG, das beispielsweise über einen Greiferarm verfügt, direkt ergriffen und auf der Lagerfläche ein- oder ausgelagert werden können.

Auch hier ist das die Ein- und Auslagerungszeit bestimmende Größe das RBG, welches wiederum - außer der Zentralsteuerung - das teuerste mechanische Bauteil ist, weshalb hiervon in einem Gang des Lagers wiederum nur ein oder zwei RBG vorhanden sind.

Des weiteren sind Flächenlager bekannt, bei denen in den meist mehreren Etagen des Lagers eine Vielzahl von Traktoren einen Anhänger, in denen sich ein oder mehrere Produkte befinden, automatisch zwischen Lagerpositionen für diese Anhänger und Be- und Entladestationen für diese Anhänger hin und her verfahren und zu diesem Zweck auch automatisch an - und abkuppeln. Die Traktoren werden von einer gemeinsamen Zentralsteuerung gesteuert, wobei die Fahrtrouten als auch die z.B. Lagerpositionen in der Regel nicht formschlüssig festgelegt sind, sondern sich lediglich durch die momentane Struktur der Lagerlandschaft ergeben.

Der Vorteil eines solchen Flächenlagers besteht darin, dass es sehr flexibel, auch hinsichtlich der Größe der einzulagernden Produkte, ist und dass es leicht skaliert werden kann, und insbesondere die Ein- und Auslagerungszeit durch Veränderung der Anzahl der Traktoren schnell beeinflusst werden kann.

Der Nachteil eines solchen Lagers besteht darin, dass alle auf der Lagerebene vorhandenen Hindernisse - beispielsweise Stützen des Lagers ebenso wie abgestellte, also eingelagerte, Anhänger oder andere im Einsatz befindliche Traktoren mit ihren vorgesehenen Fahrtrouten - die Möglichkeiten für die Fahrtroute eines weiteren Traktors stark einschränken, und dieser vom Startpunkt zum Zielpunkt teilweise relativ lange Wege fahren muss.

**In diesem Zusammenhang sind aus dem US-Patent** US8,453,962B2 **bereits Multikopter bekannt, die in der Lage sind, eine Last, wie etwa einen Transportcontainer oder ein Land- oder Seefahrzeug selbsttätig anzukuppeln und aufzunehmen und anschließend durch die Luft zu transportieren.**

Dieses Dokument offenbart ein Verfahren nach dem Oberbegriff des Anspruchs 1.

### III. Darstellung der Erfindung

### a) Technische Aufgabe

Es ist daher die Aufgabe gemäß der Erfindung, ein Verfahren sowie eine Vorrichtung zum Lagern von Produkten zu schaffen, bei dem trotz verhältnismäßig geringen Kosten die Umschlagleistung als auch die Lagergröße dem Bedarf sehr leicht anpassbar ist und eine hohe Ausfallsicherheit aufgrund Redundanz der Elemente leicht erreicht werden kann.

### b) Lösung der Aufgabe

Diese Aufgabe wird durch die Merkmale der Ansprüche **1** und 9 gelöst. Vorteilhafte Ausführungsformen ergeben sich aus den Unteransprüchen.

Der Grundgedanke der vorliegenden Erfindung besteht darin, dass auf der - ein- oder mehrgeschossigen - Lagerfläche des Lagers an - meist nicht formschlüssig festgelegten - Lagerpositionen entweder Produkte direkt abgelegt und damit eingelagert werden oder indirekt, indem das eine oder die mehreren Produkte in einem schalenförmigen Tray liegen, der an der Lagerposition abgestellt und damit eingelagert wird, die der Zentralsteuerung bekannt, aber ansonsten chaotisch ist. Das Ein- und Auslagern der Produkte und/oder Trays geschieht mit Hilfe von unbemannten Fluggeräten, die sowohl das Produkt direkt als auch einen Tray mit dem Produkt automatisch an- o-der abkoppeln können und entlang der Lagerfläche hin und her bewegt werden, vorzugsweise auf von einer Zentralsteuerung vorgegebenen Bewegungswegen.

Erfindungsgemäß wird ein solches bekanntes Lager dadurch weitergebildet, dass als Transportfahrzeuge statt auf dem Untergrund fahrende Fahrzeuge Fluggeräte verwendet werden, die auch in der Luft schweben können, vorzugsweise sogenannte Multikopter, die zwei oder mehr Auftrieb erzeugende Rotoren besitzen.

Auf den ersten Blick mag dies aufwendiger und störanfälliger als auf dem Untergrund fahrende Fahrzeuge erscheinen, jedoch sind die Vorteile ganz erheblich:
- Auf dem Untergrund fahrende Transportfahrzeuge sind sehr manövrierfähig, können zum Teil auch auf der Stelle drehen, verlieren diese hohe Manövrierfähigkeit jedoch sehr stark, wenn sie einen Tray mit darin befindlichem Produkt als Anhänger angekuppelt haben und hinter sich herziehen, insbesondere bei Kurvenfahrt, Rückwärtsfahrt, rückwärts Einparken und ähnlichen Manövern, bei denen die Position und Lage des Transportfahrzeuges durch entsprechende Sensoren jederzeit bekannt ist, nicht unbedingt jedoch auch die des als Anhänger ausgebildeten Trays, der ja wegen der großen Anzahl vorhandener Anhänger möglichst einfach und damit technisch simpel ausgebildet sein muss.

Der Energieaufwand, um ein Fahrzeug mit einem bestimmten Gewicht in der Luft zu halten, ist zwar höher, als es auf dem Untergrund zu verfahren, jedoch ist der Energieaufwand beim Betrieb eines solchen Lagers betriebswirtschaftlich eher nebensächlich:
- Statt dessen überwiegt der Vorteil, dass bei einem fliegenden Transportfahrzeug - sofern ausreichend Freiraum darüber vorhanden ist - die meisten Hindernisse wie abgestellte Produkte oder Trays einfach überflogen werden können, und nur über den gesamten vertikalen Freiraum durchgehende Hindernisse wie etwa Stützen der Lagerkonstruktion von den Multikoptern bei ihren Bewegungswegen berücksichtigt werden müssen.
- Auch ein Wechsel von einer Etage in eine andere ist für einen Multikopter der auf einfache Weise dadurch möglich, dass er entweder außerhalb des Lagers auf die Höhe der anderen Etage fliegt oder innerhalb des Lagers in entsprechenden Schächten, ohne dass mechanisch aufwändige Komponenten wie Aufzüge oder Ähnliches gebaut und angesteuert werden müssen,
- der aufwändige Zubringerdienst außerhalb des eigentlichen Lagers von einer Anlieferstation aus bis zum Lager entfällt, da dies ebenfalls direkt von den Multikoptern durchgeführt werden kann.

Hinsichtlich des erfindungsgemäßen Verfahrens besteht die Lösung der Aufgabe deshalb darin, dass zum einen als Transportfahrzeuge Fluggeräte, die auch in der Luft stehen können, sowie in allen Raumrichtungen fliegen können und sich auf der Stelle drehen können, verwendet werden und die Bewegungswege dieser Fluggeräte, vorzugsweise Multikopter, über die auf der Lagerfläche abgestellten Produkte und/oder Trays hinweg geführt werden. Im Folgenden wird nur noch von Multikoptern gesprochen, ohne die Erfindung hierauf zu beschränken.

Hierfür muss der Nachteil in Kauf genommen werden, dass die lichte Höhe über der Lagerfläche mindestens so groß ist wie die Höhe eines solchen Multikopters einschließlich darunter angekoppeltem Tray zuzüglich der Höhe des zu überfliegenden Trays oder Produktes, jedoch wegen der dadurch sehr viel einfacheren und verkürzten Bewegungswege für das Ein- und Auslagern die gleiche Reaktionszeit des Lagers mit weniger Fluggeräten als mit fahrenden Transportgeräten erreicht werden kann.

Um die Raumausnutzung des Lagers zu optimieren, werden vorzugsweise die Produkte direkt, also ohne Trays, auf der Lagerfläche abgelegt. Dies ist jedoch nur möglich, wenn das Produkt dazu geeignet ist, anschließend von der dafür vorgesehenen Kopplungseinrichtung des Multikopters aufgenommen zu werden.

Häufig sind ja die Produkte sowohl von ihren Abmessungen, als auch von ihrer Struktur und Oberfläche her unterschiedlich, jedoch gibt es dennoch Kopplungsvorrichtungen wie beispielsweise flächig wirkende Sauger, mit denen eine Vielzahl unterschiedlicher Produkte ergriffen werden kann, sofern sie ein zulässiges Maximalgewicht nicht überschreiten. Im Gegensatz dazu erfordern mechanische Greifer meist wesentlich stärkere Anpassungen an das zu ergreifende Objekt in den Dimensionen und auch eine höhere Stabilität der zu ergreifenden Produkte.

Nur diejenigen Produkte, die nicht direkt mittels der Kopplungsvorrichtung eines solchen **Multikopters** ergriffen und transportiert werden können, werden ersatzweise in Trays abgelegt, was an Beladestationen geschieht, und der so beladene Tray vom Multikopter aufgenommen, beispielsweise an dessen Unterseite angekoppelt, also lösbar befestigt.

Bei diesem An- oder Abkuppeln kann der Multikopter die notwendige definierte Höhe über dem Produkt oder Tray mittels eines Abstandsmesssystems, insbesondere eines berührungslos arbeitenden Abstandsmesssystems, einhalten, welches den Abstand gegenüber dem Boden, dem aufzunehmenden Produkt und/oder gegenüber der Decke über der Lagerfläche ständig misst, jedoch kann der Multikopter beim An- und Abkuppeln auch mittels Füßen auf dem Untergrund aufsitzen.

Da die Trays so bemessen sind, dass auch eines der größeren Produkte darin Platz findet, sind - in der Aufsicht betrachtet - die meisten Produkte deutlich kleiner als ein Tray. Deshalb kann ein Multikopter an seiner Unterseite auch mehrere Produkte nebeneinander einzeln und unabhängig voneinander, auch zeitlich versetzt, aufnehmen und ablegen, während in der Regel nur ein einziger Tray unter dem Multikopter Platz findet.

Damit auch mehrere Produkte nebeneinander und unabhängig voneinander an der Unterseite des Multikopters ergriffen und angekuppelt werden können, sind die dafür vorhandenen Kopplungseinrichtungen vom Multikopter vorzugsweise aus nach unten ausfahrbar und einfahrbar, um im eingefahrenen Zustand das Ankoppeln und die Tätigkeit daneben befindlicher Kopplungseinrichtungen nicht zu behindern.

Dementsprechend kann der Multikopter beim direkten Aufnehmen von Produkten mehrere Produkte an unterschiedlichen Positionen nacheinander aufnehmen oder absetzen.

Nach dem Ankuppeln des beladenen Trays oder des Produktes direkt hebt der Multikopter dieses vom Boden ab und fliegt damit zur gewünschten Position, beispielsweise einer Lagerposition für das entsprechende Produkt, stellt es auf dem Untergrund ab und kuppelt es ab.

Danach fliegt der Multikopter entweder zu einem neuen Einsatz oder zu einer Wärteposition, wo er fliegend oder stehend auf einen neuen Einsatz warten kann und/oder zu einer Ladestation, wo sein Akku aufgeladen oder gewechselt wird.

Das Auslagern erfolgt analog umgekehrt, indem der Multikopter vom Zentralrechner die entsprechende Lagerposition des Trays oder des direkt abgestellten Produktes mitgeteilt erhält, vorzugsweise auch den Bewegungsweg dorthin mitgeteilt erhält, diese Position anfliegt, sich darüber positioniert, durch Aktivieren seiner Kopplungseinrichtung den Tray und/oder das Produkt ankoppelt, vom Boden abhebt und zur gewünschten Position fliegt, bei einem gefüllten Tray beispielsweise zu einer Entladestation für Trays.

Von der Entladestation können die Trays entweder mittels des Multikopters, vorzugsweise jedoch mittels einer separaten Transportvorrichtung, beispielsweise eines Förderbandes, zu einer Parkposition für leere Trays und/oder zu einer der Beladestationen transportiert werden.

Die Multikopter navigieren - vor allem im Nahbereich - vorzugsweise mit Hilfe von Markierungen, die entweder auf der Lagerebene oder auf der Decke über der Lagerebene angebracht sind, vorzugsweise durchgehend angebracht sind.

Von der Zentralsteuerung erhalten die Multikopter nicht nur die Aufträge für einzelne Flüge einschließlich Zeitpunkt und einzuschlagenden Bewegungsweg, sondern in der Regel zusätzlich auch Daten über die Lagerungslandschaft, sofern diese für die Flugrouten von Bedeutung ist.

Zusätzlich kann eine grobe Positionsbestimmung und auch Navigation des Fluggerätes sowohl innerhalb des Lagers als auch außerhalb des Lagers mithilfe eines zweiten Navigationssystems, beispielsweise mit Hilfe eines GPS-Systems oder mit Hilfe von ortsfest installierten Kameras oder anderen geeigneten Sensoren erfolgen, deren Blickrichtungen sich insbesondere kreuzen, und die daraus die Position des Fluggerätes zumindest grob in den drei Raumrichtungen bestimmen können.

Da der Multikopter über eine eigene Navigation verfügt, kann er jedoch auch während Zeitabschnitten ohne Funkverbindung mit der Zentrale seinen Auftrag weiterhin durchführen.

Die Lagerfläche kann auch aus mehreren Etagen übereinander bestehen, und in diesem Fall müssen die Multikopter mit oder ohne Ladung auch von einer Etage in die andere fliegen können.

Dies kann entweder außerhalb der Etagen des Lagers geschehen, wenn jede Etage auf zumindest einer Seite offen ist und der Multikopter außerhalb der Lagerfläche senkrecht aufsteigen und absinken kann, oder dies geschieht auch innerhalb des Lagers in entsprechenden vertikalen Schächten, die groß genug sind für den Multikopter.

Dabei kann das Lager auch aus einem handelsüblichen Regalsystem bestehen, bei dem sich zwischen den Reihen von Regalen Gänge befinden, die sich über die gesamte Höhe des Lagers und die gesamte Tiefe des Lagers erstrecken, und in denen die Multikopter sehr schnell die benötigte Regalposition anfliegen können. Wichtig ist hierbei, dass die einzelnen Reihen von Regalen in Querrichtung durchfliegbar sind, also keine Trennwand, Rückwand oder Ähnliches aufweisen Die Gänge ergibt einen erhöhten Raumbedarf für das Lager zu Gunsten einer schnelleren Reaktionszeit des Lagers.

Für die eindeutige Identifizierung sind sowohl alle Trays als auch alle Produkte und alle Multikopter mit eindeutigen, vorzugsweise kontaktlos lesbaren, Kennzeichnungen wie etwa Barcodes ausgestattet, und an allen wichtigen Punkten wie etwa Beladestationen und Entladestationen für die Trays entsprechende Lesegeräte für diese Kennzeichnungen vorhanden, um den entsprechenden Tray oder Multikopter automatisch zu identifizieren.

Es muss auch mit dem Fall gerechnet werden, dass ein Multikopter innerhalb des Lagers versagt oder sich ein Tray nicht wie gewünscht von einem Multikopter ankuppeln und hochheben und abtransportieren lässt. In diesem Fall wird der Multikopter entweder von der Koptersteuerung oder von der Zentralsteuerung aus stillgesetzt, und der entsprechende Teil der Lagerfläche vorerst für das Ein- und Auslagern gesperrt, bis der havarierte Multikopter oder Tray aus dem Lager entfernt ist, was meist manuell geschehen wird.

Hinsichtlich des Lagers wird die erfindungsgemäße Aufgabe dadurch gelöst, dass die Transportfahrzeuge die beschriebenen Fluggeräte, insbesondere Multikopter, mit Kopplungseinrichtungen für Produkte oder Trays sind.

Dabei soll der freie vertikale Abstand über der Lagerfläche etwas größer sein als die Höhe des verwendeten Fluggerätes, insbesondere des Multikopters, einschließlich eines darunter angekoppelten Tray zuzüglich der Höhe eines weiteren, zu überfliegenden Trays.

Um das Lagervolumen gering zu halten, sollte der freie vertikale Abstand jedoch nur unwesentlich größer sein, da der Multikopter vertikal über der Lagerfläche sehr gut steuerbar ist durch eine Abstandsmessvorrichtung, die entweder nach unten zur Lagerfläche oder nach oben zur Decke darüber ständig den Ist-Abstand des Multikopters ermittelt, wobei der Multikopter auch Stellfüße zum Abstellen auf dem Untergrund und/oder mechanische Taster gegenüber der Decke über der Lagerfläche aufweisen kann, die auch beim automatischen An- und Abkuppeln eines Trays und/oder eines Produktes benutzt werden können.

Dennoch kann es sinnvoll sein, dass zwischen den eingelagerten Produkten oder Trays Gassen auf der Lagerfläche freigelassen werden, entlang welcher die Multikopter fliegen können und dabei die volle Höhe zwischen zwei übereinander liegenden Etagen der Lagerfläche zur Verfügung haben, denn dies führt dazu, dass die Multikopter entlang dieser Gassen sehr viel schneller fliegen können, da die Höhen-Steuerung weniger genau sein muss, als im Zwischenraum zwischen abgestellten Trays und der darüber befindlichen nächsten Lagerfläche.

Generell sollen die Lagerpositionen auf der Lagerfläche möglichst wenig vorzugsweise überhaupt nicht, formschlüssig unterteilt sein, um die Lagerfläche möglichst individuell einteilen und benutzen zu können.

Gerade bei sehr kleinen und leichten Produkten, wie beispielsweise Arzneimittelverpackungen als Produkte, kann es jedoch das Problem geben, dass solche leichten, direkt auf der Lagerfläche abgelegten Produkte beim Anfliegen eines Multikopters von oben oder schräg oben durch dessen Abwind seitlich verrutscht werden und nicht mehr die vom Zentralrechner gespeicherte Position besitzen.

Natürlich können solche kleinen und leichten Produkte in - aus Gründen der Gewichtsersparnis möglichst leichte - Trays eingesetzt und abgelagert werden, aber dann stellt sich zumindest an der Entladestation zum Teil das gleiche Problem, denn das Produkt ist in der Regel wesentlich kleiner als der benutzte Tray. Zusätzlich wird dadurch der Platzbedarf im Lager unnötig erhöht.

Optional wird deshalb vorgesehen, für sehr kleine und leichte Produkte formschlüssig unterteilte Lagerpositionen, beispielsweise abgetrennt durch Zwischenwände, vorzusehen, so dass sich dort abgelegte Produkte nur innerhalb der Zwischenwände bewegen können.

Die im Zentralrechner gespeicherte Grobposition bleibt dadurch erhalten, und die exakte Position kann von der im Multikopter vorhandenen Kamera erkannt und damit die Kopplungsvorrichtung gesteuert werden.

Die Kopplungseinrichtung zum direkten Aufnehmen einzelner Produkte befindet sich vorzugsweise an der Unterseite des Zentralbereichs des Multikopters, von dem aus sich mehrere Auslegerarme über den Umfang verteilt radial nach außen erstrecken, an deren äußeren Ende die den Auftrieb erzeugenden Rotoren sitzen.

Die Kopplungseinrichtungen für die direkte Aufnahme einzelner Produkte sind vorzugsweise nach unten ausfahrbar und/oder aktivierbar bzw. einfahrbar und/oder deaktivierbar. Bevorzugt werden Sauger als Kopplungseinrichtungen eingesetzt.

Um den Luftstrom der Abwinde wenigstens unterhalb des Zentralbereichs des Multikopters gering zu halten, können auch Schutzwände zwischen dem Zentralbereich und den Auslegerarmen von der Unterseite des Multikopters nach unten ragen.

Vorzugsweise umfasst der Multikopter vier Auslegerarme, die über den Umfang verteilt und mit Abstand dazwischen angeordnet sind, was es ermöglicht, dass ein solcher Multikopter mit seinem Zentralbereich auch an die Stützen des Lagers sehr nah heranfliegen kann. Zu diesem Zweck ist vorzugsweise um jeden Rotor herum ein Schutzring angeordnet.

Generell kann die Führung des Multikopters von Eigen-Navigation auf Führung durch die Zentralsteuerung oder auf Führung per Hand mittels Sicht der Kamera des Multikopters durch den Bediener umgestellt werden.

Analog zu den Kopplungselementen am Multikopter für die Trays besitzen die Trays Kopplungselemente, insbesondere an ihrer Oberseite oder Seitenwand, beispielsweise ein oder mehrere nach oben vorstehende Draht-Bügel, die von einem vom Multikopter nach unten ragenden einfachen Haken ergriffen werden können.

Für die Orientierung der Multikopter sind entweder auf der Lagerfläche und/oder an der Decke darüber kontaktlos abzutastende, vorzugsweise optische, Markierungen angeordnet, beispielsweise Barcodes.

Die Markierungen können parallel zueinander verlaufende Rasterlinien oder sich rechtwinklig kreuzende Rasterlinien aufweisen, und zusätzliche Markierungen, insbesondere Barcodes, die Informationen über die Position enthalten, können im Inneren der Raster oder an den Kreuzungspunkten der Raster angeordnet sein.

Die Multikopter sind mittels einer drahtlosen Verbindung, vorzugsweise mittels WLAN, vorzugsweise ständig, mit der Zentralsteuerung verbunden und besitzen zusätzlich einen drahtlosen Notkanal zur Verbindung mit der Zentralsteuerung, beispielsweise Funk oder Ultraschall, um die Wahrscheinlichkeit, dass die Verbindung zur Zentralsteuerung abreißt oder über einen zu langen Zeitraum abreißt, zu minimieren.

Um die Energieversorgung der Multikopter sicher zu stellen, werden an einer oder mehreren Ladestationen in oder außerhalb des Lagers geladene elektrische Akkus vorrätig gehalten, die von einem Multikopter mit leerem Akku angeflogen werden können, und wo er automatisch den leeren gegen einen vollen Akku getauscht erhält oder seinen eingesetzten Akku nachgeladen erhält.

Damit bei einer Lagerfläche, die sich über mehrere Etagen erstreckt, der Multikopter mit oder ohne Ladung von einer in die andere Etage gelangen kann, sind entweder innerhalb des Lagers vertikale Schächte vorhanden, die groß genug sind, dass darin der Multikopter vertikal aufsteigen oder absinken kann, und vorzugsweise auch ein Bediener durch diese Schächte ins Innere des Lagers hinein gelangen kann und/oder die Etagen der Lagerfläche sind zumindest an einer Seite teilweise soweit offen, dass der Multikopter seitlich aus der entsprechenden Etage herausfliegen, aufsteigen oder absinken und in der gewünschten Etage wieder in die Lagerebene einfliegen kann.

Sofern die Lagerfläche aus mehreren Etagen übereinander besteht, ist sie vorzugsweise aus rasterartigen, insbesondere rechteckigen Bodenplatten zusammengesetzt, die auf regelmäßig angeordneten Stützen und/oder Tragwerken aufliegen und nach oben von den Stützen oder Tragwerken abgehoben werden können.

Diese Bodenplatten sollten groß genug sein, dass durch die entstehende Öffnung - auch über mehrere Etagen hinweg - ein menschlicher Bediener in das Lager hinauf oder hinab gelangen kann.

Eine andere Möglichkeit besteht darin, die vertikalen Schächte zum Aufsteigen und Absinken der Multikopter so auszugestalten, dass ein Bediener hierdurch ins Innere des Lagers gelangen kann.

### c) Ausführungsbeispiele

Ausführungsformen gemäß der Erfindung sind im Folgenden beispielhaft näher beschrieben. Es zeigen:

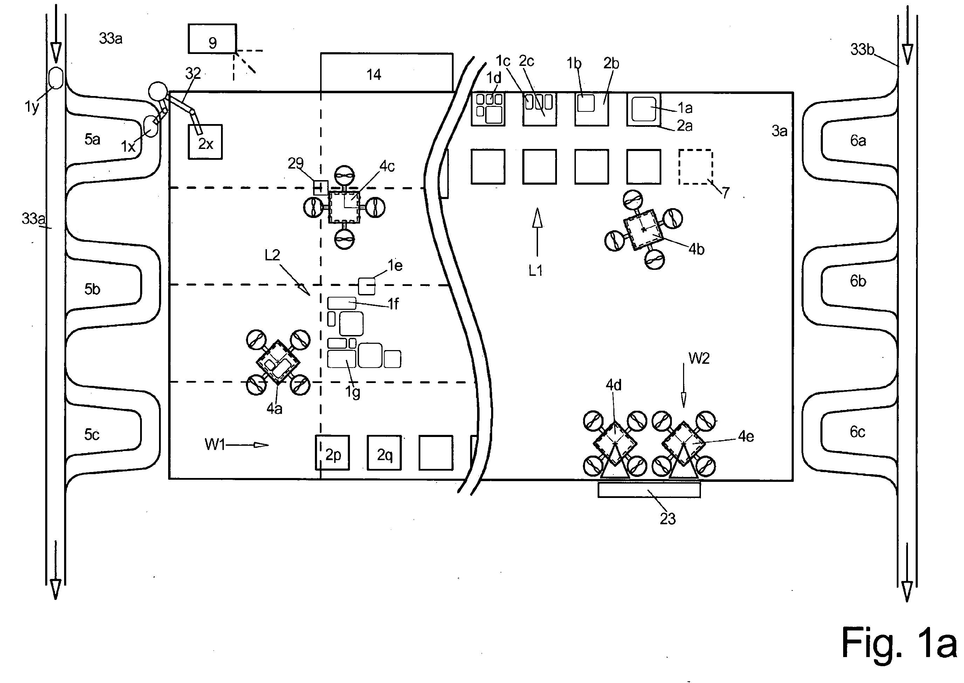

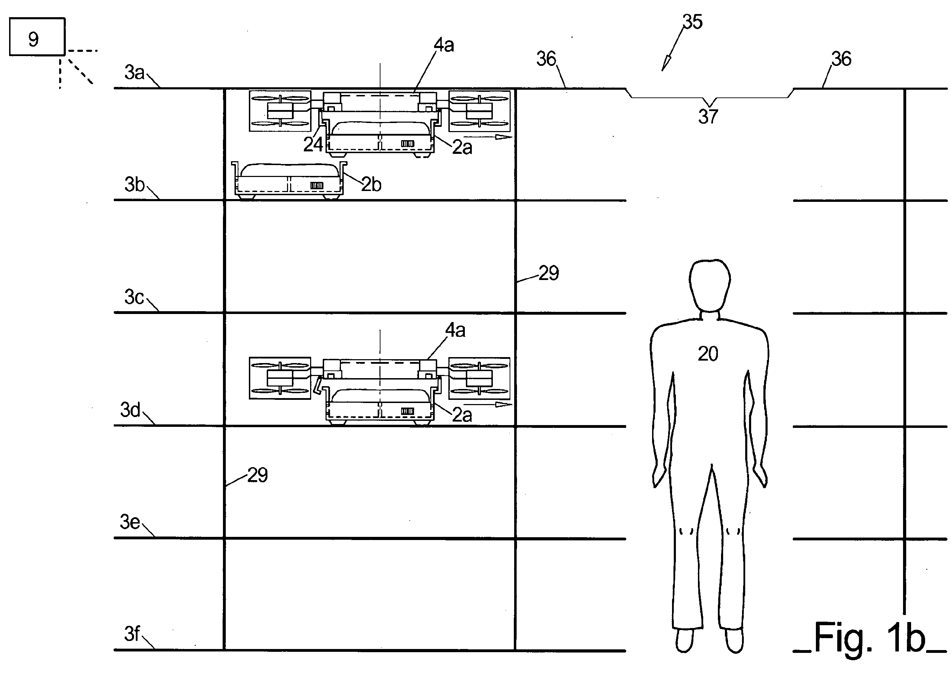

- Fig. **1**a:: eine Lagerfläche in der Aufsicht,
- Fig. **1**b:: eine Lagerfläche mit mehreren Etagen übereinander in der Seitenansicht,
- Fig. **2**a - c:: vergrößerte Ausschnitte aus einer Lagerfläche,
- Fig. **3:**: einen Multikopter in der Seitenansicht und in der Aufsicht,
- Fig. **4:**: einen Aufnahmevorgang.

Fig. **1**a zeigt in der Aufsicht die in diesem Fall rechteckige Lagerfläche **3**a - was jedoch keine Voraussetzung für die vorliegende Erfindung ist - auf der einerseits schalenförmige Trays **2**a-x mit Produkten **1**a-d beladen, abgestellt und dadurch gelagert werden sollen, andererseits aber auch Produkte **1** e - g direkt abgelegt und dadurch gelagert werden sollen, bis sie anderweitig benötigt werden.

Zu diesem Zweck gibt es - vor allem für die Trays **2**a, b - auf der einen Schmalseite der Lagerfläche **3**a eine oder in diesem Fall mehrere Beladestationen **5**a, b, c, an denen Produkte **1**x, **1**y angeliefert und mittels einer dort vorhandenen Umladevorrichtung, vorzugsweise automatisch, beispielsweise mit Hilfe eines Roboters **32**, in einen dort bereitgestellten Tray **2**x geladen werden oder direkt auf die Lagerfläche **3**a gesetzt werden für die anschließende Aufnahme durch einen der Multikopter.

Ebenso gibt es auf der gegenüberliegenden Stirnseite in diesem Fall drei Entladestationen **6**a - c, bei denen analog umgekehrt Produkte von einem an der Entladestation bereitgestellten, beladenen Tray abgenommen werden können, oder an der aus dem Lager entnommene Produkte direkt abgelegt werden können.

Das An- und Abliefern der Produkte zu den Be- und Entladestationen **5**, **6** geschieht in diesem Fall mit Hilfe jeweils eines Förderbandes **33**a, b, wobei vorzugsweise an den einzelnen Be-/Entladestationen **5**a..., **6**a... eine Ausschleusung der Produkte von dem durchgehenden Förderband erfolgt, damit das Produkt **1**y zum Umlagern an der Beladestation **5**a oder auch der Entladestation **5**b stillsteht und von dem z.B. Roboter **32** erkannt und ergriffen werden kann, was in der Regel mittels Saugern anstelle von mechanischen Greifern geschieht.

Das Wesentliche der Erfindung besteht darin, dass die Trays **2**a,... keinen Antrieb besitzen, sondern auf der Lagerfläche **3**a mit Hilfe von motorisch angetriebenen Fluggeräten, hier Multikoptern **4**a-e auf der Lagerfläche **3**a bewegt, also geflogen, werden, im abgestellten Zustand auf der ohnehin im Idealfall genau horizontalen Lagerfläche **3**a jedoch selbsthemmend stehen.

Von den Multikoptern **4**a, b werden die Trays **2**a, b vorzugsweise jeweils einzeln zwischen einer Beladestation z. B. **5**a und einer der Lagerpositionen L**1**, L**2** hin und her bewegt, und ebenso zwischen einer Lagerposition L**1**, L**2** und einer Entladestation **6**a

Es können auch weitere Bearbeitungspositionen vorhanden sein, an denen die Produkte **1**a,... beispielsweise mit Etiketten versehen, gewogen oder anderweitig bearbeitet werden.

Zu diesem Zweck sollte die Lagerfläche **3**a möglichst frei von in der Höhe durchgehenden Hindernissen, sein, also auch möglichst wenige Stützen **29** oder Ähnliches aufweisen, um die Beweglichkeit der Multikopter **4**a, b,... und daran hängenden Trays **2**a, b,... möglichst wenig zu behindern.

Fig. **1**a zeigt im linken Bildbereich eine Lagerposition L**2**, in der die Produkte **1** e - g direkt auf der Lagerfläche **3**a abgestellt sind.

Im Gegensatz dazu sind an der Lagerposition L**1** in der rechten Bildhälfte mit Produkten **1**a.... gefüllte Trays **2**a... eingelagert.

In der linken Bildhälfte ist weiter ein Wartebereich W**1** für unbeladene Trays **2**p, **2**q... dargestellt, so wie in der rechten Bildhälfte ein Wartebereich W**2** für momentan nicht im Einsatz befindliche Multikopter **4**d, **4**e, die an dieser Warteposition W**2** zusätzlich an einer Ladestation **23** automatisch angekoppelt sind, die während der Wartezeit den Akkumulator **22** in den einzelnen Multikoptern **4**d,e,... wieder auflädt.

Alle Bewegungen aller bewegten Elemente, also die Bewegungswege und Bewegungs-Zeitpunkte bzw. -Zeiträume der Multikopter **4**a, b, die Steuerung der Förderbänder **33**a, b und insbesondere deren Ausschleusungen zu den Be- und Entladestationen **5**a..., **6**a... und die Bewegung der Roboter **32** werden von einer Zentralsteuerung **9** gesteuert, wobei die Signalverbindung zu den Multikoptern **4**a, b,... drahtlos erfolgt, da sich diese unabhängig voneinander und frei auf der Lagerfläche **3**a,b bewegen sollen.

Im linken Bereich ist ferner ein Multikopter **4**a dargestellt, der gerade zwei einzelne Produkte transportiert, und etwas weiter oben ist dargestellt, wie nah ein Multikopter **4**A an eine Stütze **29** herangeführt werden kann, indem sich die Stütze **29** zwischen zwei seiner beiden Ausleger befindet.

Fig. **1**b zeigt in der Seitenansicht ein mehrgeschossiges Lager **35** mit übereinander angeordneten Lagerflächen **3**a,b. Anhand des daneben dargestellten Bedieners **20** ist ersichtlich, dass der vertikale Abstand der Lagerflächen **3**a,b auch so gering sein kann, dass ein Bediener **20** dort vielleicht nicht vollständig hineinkriechen kann, aber zumindest mit seinem Arm hinein greifen könnte.

Fig. **1**b zeigt auch, dass bei übereinander angeordneten Lagerflächen **3**a,b,... sofort das Problem der Unterstützung dieser Lagerflächen entsteht, denn ab einer gewissen Flächenausdehnung der Lagerflächen **3**a, b ist lediglich randseitige Unterstützung nicht ausreichend, sondern es müssen dazwischen im Abstand Stützen **29** eingebaut werden, die in der jeweils darunter befindlichen Lagerfläche **3**b,... als Hindernisse für die Trays und Multikopter wirken.

Das Lager **35** besteht in diesem Fall aus mehreren im Abstand zueinander aufgestellten Regalen **36**, zwischen denen sich ein Gang **37** befindet, der sich über die gesamte Höhe und auch Tiefe des Lagers **35** erstreckt, in dem zum einen die Multikopter entlang fliegen können, der aber auch breit genug ist, damit sich ein Bediener **20** darin entlang bewegen kann.

Die einzelnen Etagen des Lagers sind zu den Seiten hin offen, so dass die Multikopter **4**a horizontal auf jeder beliebigen Etage in das Lager hinein und aus diesem wieder heraus fliegen können, um beispielsweise BeladeStationen oder Entladestationen anzufliegen, die sich außerhalb dieses mehrgeschossigen Lagers auf einem beliebigen Niveau, also beispielsweise auf Höhe der untersten Etage, befinden können.

In einer der mittleren Etagen ist ferner dargestellt, wie ein Multikopter **4**a gerade einen Tray **2**a aufnimmt. Dabei ist auf der einen Seite die Verriegelung zwischen beiden bereits geschlossen, auf der linken Seite noch geöffnet.

An dem Beispiel der oberen Etage ist auch zu erkennen, dass die lichte Höhe zwischen zwei Lagerflächen **3**a, b ausreicht, dass ein Multikopter **4**a auch mit darunter angekoppeltem Tray **2**a noch über einen anderen, abgestellten Tray **2**b hinweg fliegen kann.

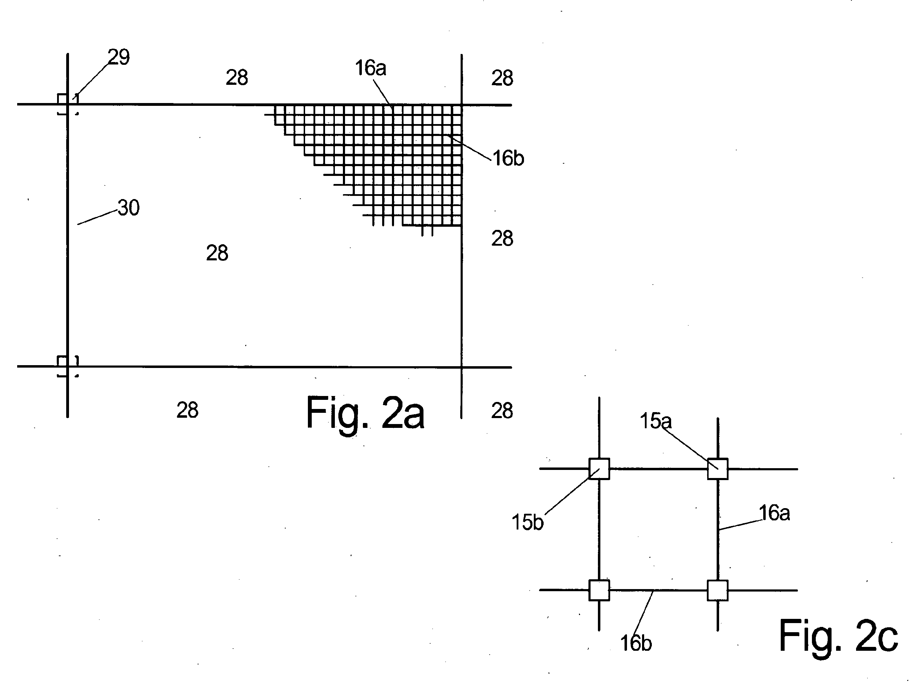

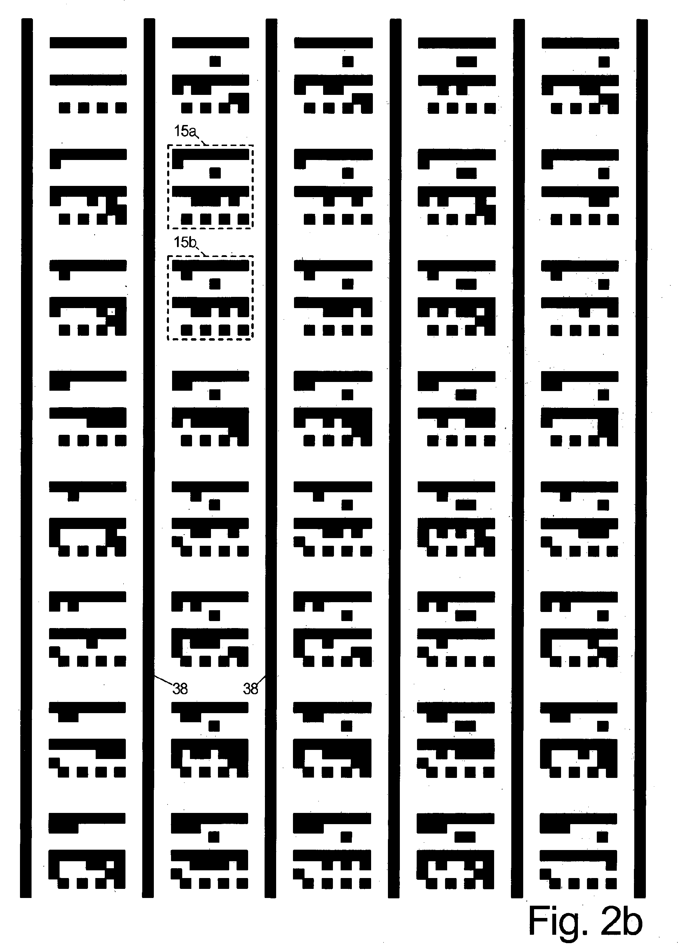

Fig. **2**a zeigt in der Aufsicht einen Ausschnitt aus einer Lagerfläche **3**a, die beispielsweise aus einer Vielzahl rechteckiger Bodenplatten **28** zusammengesetzt sein kann, die rasterartig angeordnet sind und in den Eckpunkten, an denen jeweils vier Lagerplatten **28** zusammenstoßen, von einer Stütze **29** abgestützt werden können.

In der rechten oberen Ecke der Bodenplatte **28** ist weiterhin ein gleichmäßiges System aus längs oder quer verlaufenden Rasterlinien **16**a,b zu erkennen, welches eine Möglichkeit ist, wie sich - in der Praxis bedecken diese optischen Markierungen die gesamte Fläche entweder der Unterseite und/oder der Oberseite aller Bodenplatten **28**, und somit der gesamten Lagerfläche **3**a,b,... oder der Decken darüber - die Multikopter mit Hilfe auf diese Markierungen ansprechender Sensoren den vorgegebenen Weg finden, denn auf der Lagerfläche **3**a,b sind die Multikopter **4**a,b nicht durch Schienen oder andere formschlüssige oder kraftschlüssige Elemente geführt, sondern frei beweglich entsprechend dem von der Zentralsteuerung vorgegebenen Flugweg.

Um zu erkennen, in welchem Feld des Rasters man sich befindet, sind vorzugsweise Barcodes **15**a,b,... in regelmäßigen Abständen, vorzugsweise in oder an jedem der aus den Rasterlinien **16**a,b gebildeten Gefache, vorhanden.

Fig. **2**b zeigt eine Lösung, bei der jedes der Gefache im Wesentlichen vollständig von einem solchen Barcode **15**a,b gefüllt ist, so dass an dem Wechsel vom einen zum nächsten Barcode der entsprechende Sensor des darüber fahrenden Multikopters **4**a,... erkennen kann, wo er sich befindet und in welche Richtung er sich bewegt.

Die Barcodes **15**a... sind dabei im Original kleiner als in Fig. **2**b dargestellt, und die Kamera **27** jedes Multikopters, die die Barcodes abtastet, hat dabei eine solche Aufnahmefläche, dass sie immer wenigsten einen ganzen, vorzugsweise **1,5** bis **2** ganze Barcodes in ihrem Blickfeld hat.

Aufgrund der immer gleichen Gestaltung der Barcodes und der in einer Richtung durchgehenden Führungslinien **38** erkennt die Koptersteuerung **9**' mit Hilfe der Kamera **27** mindestens einen Barcode**15**a..., und damit anhand der darin verschlüsselten Informationen, an welcher Stelle einer Bodenplatte **28** er sich befindet.

Zu diesem Zweck sind die einzelnen Bodenplatten **28** vorzugsweise identisch bedruckt und dadurch einerseits leicht austauschbar und mit der gleichen Druckvorlage herstellbar, so dass sich auf jeder Bodenplatte **28** der gleiche Barcode **15**a... an immer der gleichen Stelle befindet.

Die Information, auf welcher der Bodenplatten **28**, also in welchem Bereich innerhalb der Lagerfläche **3**a... sich der Multikopter befindet, muss dann aber von einer anderen Informationsquelle stammen, insbesondere durch ein Grob-Navigationssystem des Multikopters, z.B. GPS oder einfaches Mitzählen der Bodenplatten in Längs- und Querrichtung seitens der Koptersteuerung **9'**.

Sobald die Koptersteuerung **9'** den momentan im Blickfeld der Kamera **27** befindlichen Barcode erkannt und hinsichtlich Lage und Informationsgehalt ausgewertet hat, ist der Koptersteuerung **9'** sowohl die Drehlage des Multikopters **4**a... bezogen auf z. B. die Führungslinien **38** auf weniger als **1**° bekannt, als auch die Position, beispielsweise der Abstand der Kamera **27** vom Mittelpunkt des Barcodes **15**a..., auf weniger als **1** mm bekannt.

Da sich die einzeln Barcodes **15**a... auf einer Bodenplatte **28** in ihrem Informationsgehalt voneinander jeweils unterscheiden, also auf einer Bodenplatte **28** keine zwei identischen Barcodes **15**a, b vorhanden sind, kann ab dem Erkennen eines Barcodes die Koptersteuerung **9'** den Multikopter **4**a... im Submillimeterbereich genau in die gewünschte Richtung und an die gewünschte Position fliegen, indem sie ständig die im Blickfeld der Kamera **27** des Multikopter **4**a... liegenden Barcodes analysiert und in Abhängigkeit davon seine Fahrtrichtung und Fluggeschwindigkeit ändert.

Da die Koptersteuerung **9'** nicht nur den zuletzt analysierten Barcode **15**a, sondern auch den nächsten vollständig in den Blickbereich der Kamera **27** geratenden Barcode z. B. **15** b vorübergehend in seinem Speicher hält, ist nicht nur die momentane Position, sondern auch die momentane Flugrichtung bei Bewegung des Multikopter **4**a... bekannt.

Fig. **2**c zeigt eine andere Lösung, bei der die Kreuzungspunkte der Rasterlinien **16**a, b freigelassen sind und in den Kreuzungsbereichen jeweils ein Barcode **15**a, b vorhanden ist.

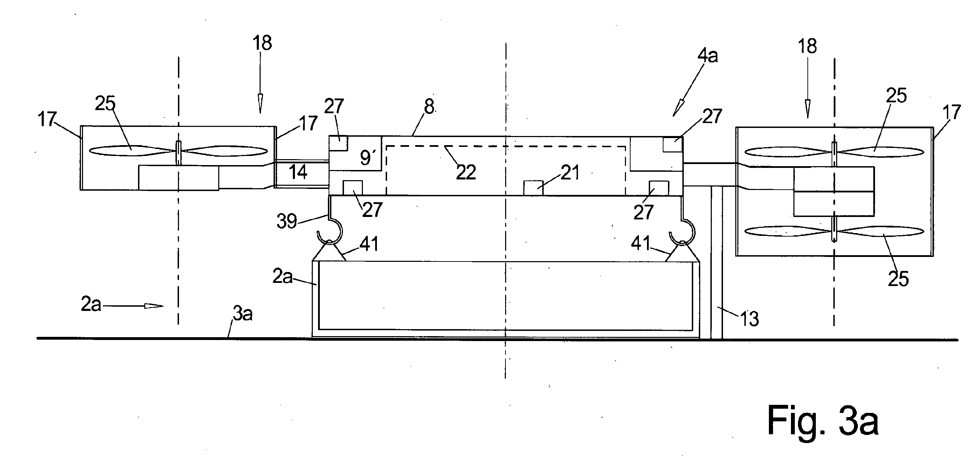

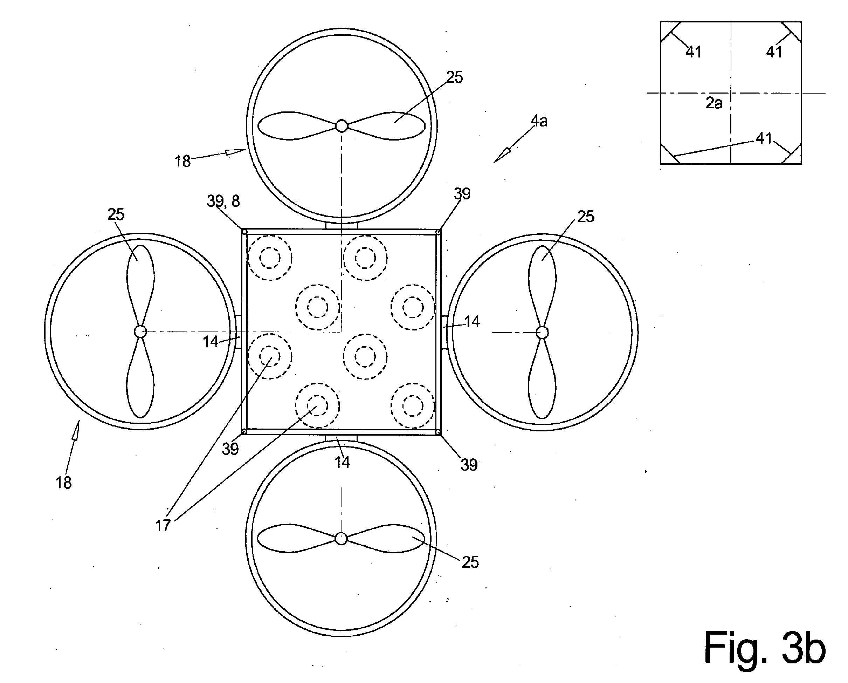

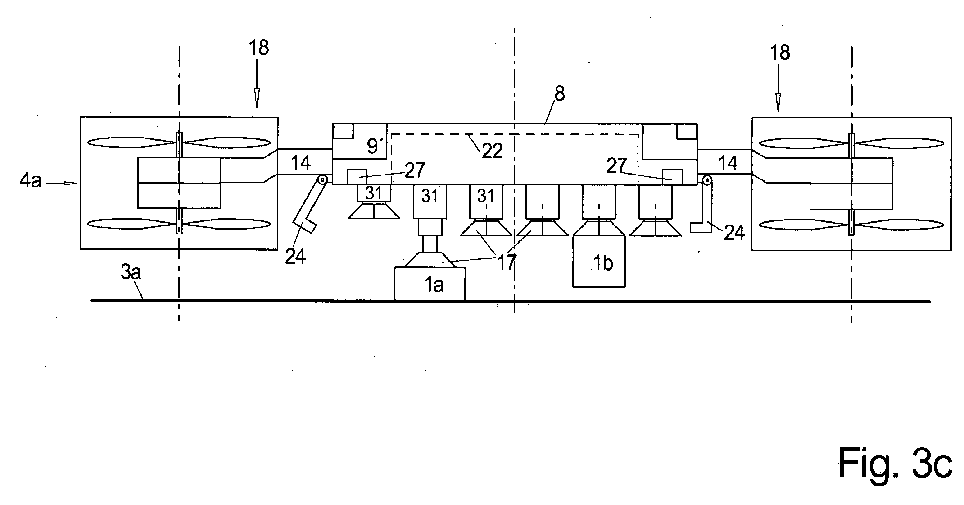

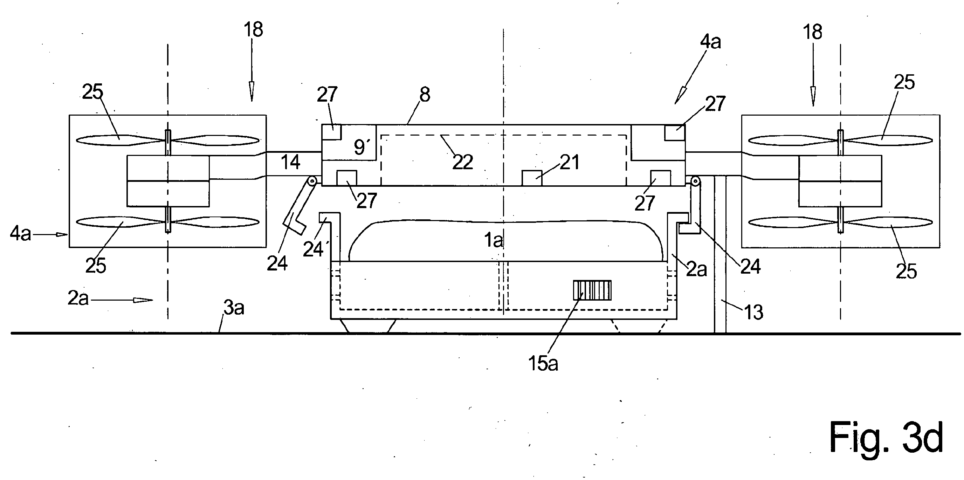

Die Figuren **3**a-d zeigen einen Multikopter **4**a in unterschiedlichen Situationen:
In Figur **3**a und d - betrachtet in horizontaler Richtung - ist ein Multikopter **4**a dargestellt, der gerade einen mit einem Produkt **1**a beladenen Tray **2**a aufnimmt.

Wie besser die Aufsicht der Figur **3**b zeigt, besteht ein solcher Multikopter aus einem Zentralkörper **8**, der in diesem Fall in der Aufsicht betrachtet quadratisch ausgebildet ist, und von diesem nach außen abragenden Auslegerarmen **14**, an deren freien äußeren Enden sich jeweils eine Rotoreinheit **18** befindet. In diesem Fall ragt von jeder der vier Seiten des Zentralkörpers **8** mittig ein Auslegerarm **14** ab.

Jede Rotoreinheit **18** besteht - wie in der linken Bildhälfte dargestellt - vorzugsweise aus mindestens einem, jeweils um eine vertikale Achse rotierend antreibbaren Rotor **25**, der den notwendigen Auftrieb erzeugt, um den Multikopter **4**a, auch mit angehängter Last, fliegen zu lassen.

Durch zwei Rotoren **25** übereinander - wie in der rechten Bildhälfte dargestellt -, die von getrennten Motoren angetrieben sind, kann eine redundante Ausbildung erreicht werden, so dass auch bei Ausfall eines der beiden Motoren der Multikopter **4**a problemlos weiter fliegen kann.

Um jeden der Autorin **25** herum ist ein sich vertikal erstreckender Schutzring **17** angeordnet, um Kollisionen des drehenden Rotors mit einem Hindernis zu vermeiden.

Zum Ankuppeln des Trays **2**a, der in der Aufsicht betrachtet etwa die Größe und Dimension des Zentralkörpers **8** des Multikopters **4**a besitzt, positioniert sich der Multikopter **4**a mit seinem Zentralkörper **8** oberhalb des Trays **2**a in einer definierten Höhe, damit die am Multikopter vorhandenen Kopplungseinrichtungen mit den am Tray vorhandenen Kopplungseinrichtungen in Eingriff geraten können.

Die Kopplungseinrichtungen sind im Fall der Figuren **3**a, b auf Seiten des Multikopters **4**a mehrere einfache, z.B. an den vier Ecken nach unten ragende Haken **39**, von denen jeder einen z.B. sich über einen Eckbereich des Trays **2**a sich erstreckenden, von dem Tray **2**a nach oben ragenden, beispielsweise U-förmigen Bügel **41** ergreifen und den Tray **2**a dadurch hochheben kann.

Die Bügel **41** und ebenso die Haken **39** können aus dünnem Drahtmaterial bestehen und damit sehr leicht ausgebildet sein, und auch der Tray selbst kann aus sehr dünnen, nicht einmal zwangsweise formbeständigem, Material wie etwa einer steifen Folie gebildet sein, um ein möglichst geringes Gewicht des Trays zu erzeugen.

Die Kopplungseinrichtungen **24**, **24**' sind dagegen im Fall der Figur **3**c, d so gestaltet, dass der wannenförmige Tray **2**a als Kopplungseinrichtung **24**' einen nach außen gekröpften oberen Rand aufweist, der von hakenförmigen Kopplungseinrichtungen **24**, die an der Unterseite des Multikopters **4**a befestigt sind, untergriffen werden können. Die hakenförmigen Kopplungseinrichtungen **24** sind zu diesem Zweck beispielsweise um eine horizontale Achse am Multikopter **4**a verschwenkbar und dadurch aktivierbar und deaktivierbar.

An jeder der vier Längsseiten des Zentralkörpers **8** beabstandet sind vorzugeweise je zwei solcher Kopplungseihrichtungen **24** vorhanden.

Zu diesem Zweck besitzt der der Multikopter **4**a entweder - nicht dargestellte - Sensoren zur Abstandsmessung nach unten gegenüber dem Untergrund und/oder nach oben gegenüber der Decke darüber, um die Höhe seines Schwebefluges über dem Tray zu steuern, oder auch - wie in der rechten Bildhälfte der Figur **3**a dargestellt - Füße **13**, mit denen der Multikoptern **4**a auf dem Untergrund aufsitzen kann und dann vorzugsweise genau die richtige Höhe über dem Untergrund besitzt, um einen darunter befindlichen Tray **2**a an- oder abkuppeln zu können.

Solche Füße **13** können auch wegklappbar und/oder ausfahrbar gestaltet sein.

In Figur **3**a und d ist auch ersichtlich, welche Bauteile im Zentralkörper **8** des Multikopters **4**a untergebracht sind:
Den größten Teil des Volumens nimmt der Akku **22** ein, der den Strom zum Antrieb der Rotoren **25** liefert.

Des Weiteren ist die Koptersteuerung **9**' hier untergebracht, sowie Kameras **27**, von denen mindestens eine nach unten und/oder mindestens eine nach oben gerichtet ist, sowie nicht dargestellte Abstandssensoren, ebenfalls in Richtung nach unten und/oder in Richtung nach oben gerichtet.

Ferner sind seitlich und/oder unten zum Beispiel Barcodeleser **21** angeordnet, um beim Überfliegen von Trays **2**a, b die an deren Seitenwänden angeordneten Barcodes **15**a lesen zu können und dadurch die Trays **2**a, b identifizieren zu können.

Die Barcodes **15**a können auch auf dem nach oben weisenden oberen Rand der Trays **2**a angeordnet sein, wobei dann der Barcodeleser **21** eine Blickrichtung nach unten aufweisen muss.

Wie die Figuren **3**b und **3**c in Aufsicht und Seitenansicht zeigen, besitzt der zumindest Zentralkörper **8** des Multikopters **4**a nach unten gerichtete Sauger **17** - die aus Übersichtlichkeitsgründen in Figur **3**a nicht eingezeichnet sind - um damit Produkte **1**a, b auch direkt aufnehmen zu können und nicht nur in Trays **2**a eingelegte Produkte.

Wie Figur **3**b zeigt, sind mehrere Sauger **17** über die Unterseite des Zentralkörpers **8** verteilt angeordnet, vorzugsweise möglichst dicht und rasterartig, um unterschiedlich dimensionierte und unterschiedlich große, auf der Lagerfläche **3**a abgelegte Produkte **1**a, b ergreifen zu können. Dies ist vor allem bei im Vergleich zum Zentralkörper **8** und auch zu einem Tray **2**a relativ kleinformatigen Produkten **1**a, b sinnvoll, da dann an der Unterseite eines Multikopters **4**a mehrere solcher Produkte nebeneinander von Saugern **17** gehalten und transportiert werden können.

So zeigt Figur **3**c, wie gerade ein auf der Lagerfläche **3**a abgelegtes Produkt **1**a vom Multikopter **4**a ergriffen wird, indem dieser mit seinem Zentralkörper **8** in einer definierten Position - die von den nach unten gerichteten Kameras **27** zusammen mit der Koptersteuerung **9**' aufgrund der festgestellten Lage des Produktes **1**a ermittelt wird - schwebt, sodass zumindest einer der Sauger **17** sich direkt oberhalb des Produktes **1**a befindet.

Die einzelnen Sauger **17** befinden sich vorzugsweise am unteren Ende eines von der Unterseite des Zentralkörpers **8** vertikal nach unten weisenden Sauger-Armes **31**, der auch teleskopierbar ist, sodass dieser nach unten ausgefahren werden kann, bis der Sauger **17** das aufzunehmende Produkt **1**a erreicht hat oder annähernd erreicht hat, und durch den im Sauger **17** erzeugten Unterdruck ansaugt und beim Einfahren des Saugerarms **31** hochhebt.

Dabei kann an anderen Saugern **17** des Multikopters **4**a währenddessen schon bereits ein anderes Produkt **1**b oder mehrere andere Produkte gehalten werden, die vorher an anderer Stelle ausgenommen wurden.

Auch bei diesem Vorgang kann der Multikopter **4**a seine notwendige definierte Höhe nicht nur mit Hilfe von Abstandssensoren gegenüber der Lagerfläche **3**a halten, sondern auch auf dieser auch mittels Füßen **13** aufsetzen, wie in Figur **3**a in der rechten Bildhälfte dargestellt.

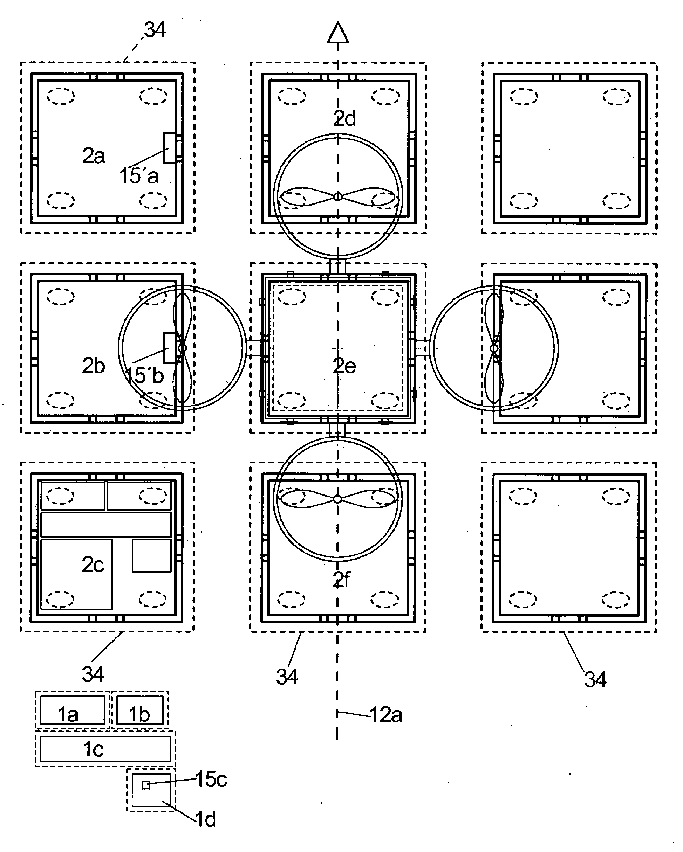

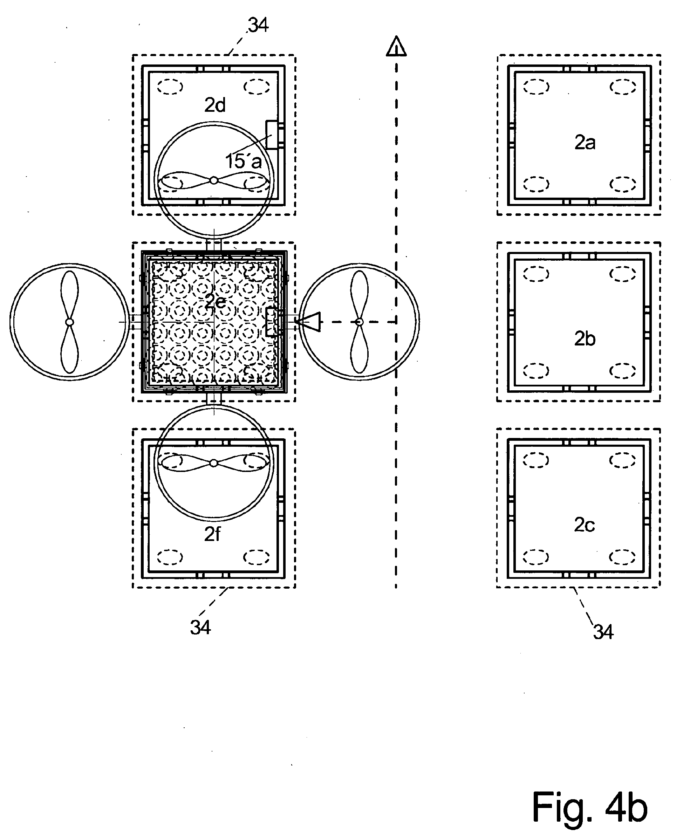

Die Figuren **4**a und b zeigen einen Manövriervorgang eines Multikopters **4**a:
Wie in Figur **4**a zu erkennen, sind auf der Lagerfläche **3**a mehrere Trays **2**a-f in Reihen nebeneinander abgestellt, die in aller Regel - hier nicht dargestellte - Produkte enthalten.

In einem Bereich daneben sind Produkte **1**a-d einzeln und nebeneinander liegend direkt auf der Lagerfläche **3**a abgelegt.

Die Produkte und Trays sind so abgestellt, dass in der Aufsicht betrachtet um jeden Tray und jedes Produkt herum ein ausreichender Freiraum, die Toleranzzone **34**, vorhanden ist, die benötigt wird, um einerseits zum Beispiel die Trays durch einen darüber schwebenden Multikopter anzukoppeln und auch, um die auf der Oberseite oder einer Seitenfläche des Trays oder Produktes aufgebrachten Barcode **15**a,b,c von einem direkt oder seitlich schräg darüber fliegenden Multikopter **4**a aus lesen zu können.

Denn falls - gemäß Figur **4**a - der Auftrag des Multikopters **4**a lautet, zum Beispiel den Tray **2**b anzukoppeln und auszulagern, so erhält der Multikopter **4**a die Grobposition dieses Trays **2**b sowie seine Flugroute von der Zentralsteuerung **9** mitgeteilt.

Dabei kommt es unter anderem darauf an, ob sich die an jedem Tray und jedem Produkt vorhandene Barcodemarkierung **15** an Seitenflächen oder an der Oberseite des Trays bzw. Produkts befindet.

Befinden sich die Barcodes **15**a,b,c auf den Seitenflächen, so fliegt der Multikopter **4**a seitlich neben der angegebenen Grobposition des gesuchten Trays **2**b an, damit er von schräg oben auf der Seitenfläche die Barcodes **15**a,b lesen kann, wie in Figur **4**a dargestellt.

Befinden sich die Barcodes **15**a,b,c an der Oberseite - und dann müssen abgelegte Produkte entsprechend so auf der Lagerfläche abgelegt werden - dann fliegt der Multikopter **4**a genau über die Reihe und auf die Position zu, an der sich der gesuchte Tray, zum Beispiel **2**e, befinden soll, und sein Barcodeleser **21** ist nach unten gerichtet, wie in Figur **4**b dargestellt.

Hat er auf diese Art und Weise den gesuchten Tray **2**b oder **2**e identifiziert, und dessen exakte Position mit Hilfe seiner Kamera erfasst, fliegt er genau über den gewünschten Tray und koppelt ihn an, wie beschrieben und dargestellt.

### BEZUGSZEICHENLISTE

- **1**a, b: Produkt
- **2**a, b: Tray
- **3**a: Lagerfläche
- **4**a, b: Multikopter
- **4'**: Servicetraktor
- **5**: Beladestation
- **6**: Entladestation
- **7**: Lagerposition
- **8**: Zentralkörper
- **9**: Zentralsteuerung
- **9'**: Koptersteuerung
- **12**a: Bewegungsweg
- **13**: Fuß
- **14**: Auslegerarm
- **15**a, b: Barcode-Markierung
- **16**a, b: Rasterliniensystem
- **17**: Schutzring
- **18**: Rotoreinheit
- **20**: Bediener
- **21**: Barcodeleser
- **22**: Akkumulator
- **23**: Ladestation
- **24**, **24**': Kopplungseinrichtung
- **25**: Rotor
- **27**: Kamera
- **28**: Bodenplatte
- **29**: Stütze
- **31**: Saugerarm
- **32**: Roboter
- **33**a, b: Förderband
- **34**a, b, c: Toleranzzone
- **35**: Lager
- **36**: Regal
- **37**: Gang
- **38**: Führungslinie
- **39**: Haken
- **40**: Abstandssensor
- **41**: Bügel

- L**1**: Lagerposition
- W**1**: Warteposition

## Patentansprüche

1. **Verfahren** zum Lagern von Produkten (**1**a, b) auf einer wenigstens eingeschossigen Lagerfläche (**3**a, b) mit motorisch angetriebenen unbemannten Fluggeräten, wobei je mindestens eines von mehreren Fluggeräten gleichzeitig
- je mindestens ein Produkt (**1**a, b) oder einen Tray (**2**a, b), der zum Einlegen eines oder mehrerer Produkte (1a, b) geeignet ist, automatisch an- oder abkuppeln kann, und
- entlang der Lagerfläche (**3**a, b) auf von einer Zentralsteuerung (**9**) vorgegebenem Bewegungsweg (12a) hin- und her bewegt,
wobei
- die Bewegungswege (**12**a) der Fluggeräte über auf der Lagerfläche (**3**a, b) abgestellte Produkte (**1**a, b) oder Trays (**2**a, b) hinweg geführt werden,
- als Fluggeräte solche verwendet werden, die in der Luft stehen können und auf der Stelle drehen können, sowie in alle Raumrichtungen fliegen können,
**dadurch gekennzeichnet, dass**
a)
zum Einlagern von Produkten (**1**a, b)
- ein Fluggerät an einer Beladestation (**5**) das Produkt (**1**a, b) direkt oder einen damit beladenen Tray (**2**a, b) automatisch ankuppelt,
- vom Boden abhebt,
- damit zu einer Lagerposition (**7**) fliegt,
- dort auf der Lagerfläche (**3**a) abstellt und abkuppelt
b)
zum Auslagern von Produkten (**1**a, b)
- ein Fluggerät wenigstens einen in einer Lagerposition (**7**) stehenden beladenen Tray (**2**a, b) oder ein Produkt (**1**a, b) anfliegt,
- selbsttätig ankuppelt,
- zu einer Entladestation (6) fliegt,
- dort das Produkt (**1**a, b) aus dem Tray (**2**a, b) entnommen wird oder das direkt angekoppelte Produkt (**1**a, b) abgekoppelt wird.

2. Verfahren nach Anspruch **1**,
**dadurch gekennzeichnet, dass**
nach dem Beenden des Ein- oder Auslagerns von Produkten (**1**a, b) das Fluggerät zu einer Warteposition (**13**) fliegt.
und/oder
nach dem Beenden des Auslagerns von Produkten (**1**a, b) der leere Tray (**2**a, b) zu einer Parkposition (**8**) verfahren wird und dort abgestellt wird, und

3. Verfahren nach Anspruch **1** oder **2**,
**dadurch gekennzeichnet, dass**
als Fluggeräte Multikopter (**4**a, b) mit mehreren Auftrieb erzeugenden Rotoren verwendet werden.

4. Verfahren nach einem der vorhergehenden Ansprüche,
**dadurch gekennzeichnet, dass**
die Fluggeräte, insbesondere Multikopter (**4**a, b),
- mit Hilfe von einer Kopplungseinrichtung (**24**), insbesondere Unterdruck-Saugern, mehrere Produkte (**1**a, b) unabhängig voneinander und nebeneinander aufnehmen können und das Fluggerät bei der direkten Aufnahme von Produkten (**1**a, b) nacheinander mehrere Produkte (**1**a, b) aufnehmen kann,
- mit Hilfe von einer Kopplungseinrichtung (**24**), insbesondere Haken (**39**), einen Tray (**2**a) ankuppeln und aufnehmen kann.

5. Verfahren nach einem der vorhergehenden Ansprüche,
**dadurch gekennzeichnet, dass**
- das Fliegen zu einer anderen Position auch das Fliegen in eine andere Etage der Lagerfläche (**3**a, b) umfasst, indem Fluggeräte, insbesondere der Multikopter (**4**a, b), außerhalb der Lagerflächen (**3**a, b) oder in einem vertikalen Schacht innerhalb der Lagerflächen (**3**a, b) in die entsprechende Etage aufsteigt oder absinkt,
und/oder
- die Fluggeräte, insbesondere Multikopter (**4**a, b), mit einer Zentralsteuerung (**9**)'drahtlos, insbesondere mittels WLAN und als Notkänal mittels Funk oder Ultraschall in Verbindung stehen und vom Zentralrechner außer der Start- und Zielposition Daten über den Zeitpunkt der Fahrt und ggf. den einzuschlagenden Bewegungsweg (**12**a), vorzugsweise auch Daten über die Lagerungslandschaft erhalten.

6. Verfahren nach einem der vorhergehenden Ansprüche,
**dadurch gekennzeichnet, dass**
die Fluggeräte, insbesondere Multikopter (**4** a) mit Hilfe von an der Unterseite der darüber liegenden Lagerebene (**3**a, b) oder an der Oberseite der darunter liegenden Lagerebene (**3**a, b) angebrachten Markierungen in dem Lager navigieren, insbesondere im Einlagerungsbereich, wo an- und abgekoppelt werden muss, zum Erreichen einer exakten Lage des Fluggerätes relativ zum abgestellten Produkt oder Tray
und/oder
die Fluggeräte, insbesondere Multikopter (**4**a, b), beim An- oder Abkuppeln entweder mittels Füßen (**13**) auf dem Untergrund, der Lagerfläche (**3**a, b) aufsitzen oder, insbesondere berührungslos, mittels eines Abstandsmesssystems ihren Abstand zur Lagerfläche (**3**a) oder zur Decke darüber messen und automatisch den Sollabstand halten.

7. Verfahren nach Anspruch6,
**dadurch gekennzeichnet, dass**
die Markierungen ein Rasterlinien-System (16a) aus wenigstens in eine Richtung parallel verlaufenden, insbesondere rechtwinklig verlaufenden, Rasterlinien (16a, b) umfassen, und die Markierungen beispielsweise Barcodes (15a, b), zum Definieren der einzelnen Raster im Inneren des Rasters oder in den Kreuzungsbereichen des Rasters angeordnet sind.

8. Verfahren nach einem der vorhergehenden Ansprüche,
**dadurch gekennzeichnet, dass**
der freie vertikale Abstand zwischen den Lagerflächen (3a, b) so gewählt wird, dass ein Fluggerät, insbesondere Multikopter (4a, b), mit darunter angekuppeltem Produkt (**1**a, b) oder Tray (2a, b) über in dieser Lagerebene abgestellte Trays (2a, b) oder Produkte (**1**a, b) hinweg fliegen kann.
und/oder
sämtliche Produkte (**1**a, b), Trays (**2**a, b) und Fluggeräte, insbesondere Multikopter (**4**a, b) über kontaktlos lesbare Kennzeichnungen, insbesondere Barcodes (**15**a, b), verfügen und entsprechende Sensoren, insbesondere Identifikations-Barcodeleser (**21**), an allen Beladestationen (**5**) und Entladestationen (**6**) vorhanden sind.

9. **Lager** für Produkte (**1**a, b), mit
- wenigstens einer Lagerfläche (**3**a, b), die körperlich durch möglichst wenige feststehende Hindernisse unterbrochen ist,
- auf der Trays (**2**a, b) abgestellt werden können, in denen wenigstens je ein Produkt (**1**a, b) liegt, oder auf der Produkte (**1**a, b) direkt abgestellt werden können,
- motorisch angetriebenen, unabhängig voneinander bewegbaren, unbemannten Fluggeräten, die in der Luft stehen können und auf der Stelle drehen können, sowie in alle Raumrichtungen fliegen können, die die Trays (2a, b) bewegen können,
- das Lager wenigstens eine Beladestation (**5**) und eine Entladestation (**6**) umfasst,
- die Lagerfläche (**3**a, b) wenigstens eine Lagerposition (**7**) aufweist.
- einem Navigationssystem, damit die Fluggeräte mit dem Tray (**2**a, b) oder Produkt (**1**a, b) eine vorgegebene Lagerposition (**7**) oder Beladestation (**5**) für Trays (**2**a, b) oder Entladestation (**6**) für Trays (**2**a, b) auf der Lagerfläche (**3**a, b) einnehmen können,
- einer Zentralsteuerung (**9**), die die mehreren gleichzeitig im Lager sich bewegenden Fluggeräte hinsichtlich ihrer Bewegungszeiten und Bewegungswege steuert,
- wobei die Fluggeräte in der Lage sind, an ihrer Unterseite sowohl Produkte (**1**a, b) unabhängig voneinander und direkt anzukoppeln und zu halten als auch einen Tray (**2**a).

10. Lager nach Anspruch **9**,
**dadurch gekennzeichnet, dass**
für die Trays (**2**a, b) an der Unterseite der Fluggeräte formschlüssige Kopplungsvorrichtungen (**24**, **24**') vorhanden sind, insbesondere wenigstens ein vom Fluggerät nach unten ragender fester Haken (**39**), sowie an den Trays (**2**a, b) Aufhängevorrichtung vorhanden sind, insbesondere nach oben aufragende Bügel (**41**) an passender Position.

11. Lager nach einem der vorhergehenden Vorrichtungsansprüche,
**dadurch gekennzeichnet, dass**
- auf der Lagerfläche (**3**a, b) Lagerpositionen (**7**a, b) formschlüssig, insbesondere durch Zwischenwände (**17**), voneinander abgetrennt sind, für das Ablegen insbesondere von kleinen und leichten Produkten (**1**a, b), insbesondere der größte Teil der Lagerfläche (**3**a, b) jedoch nicht formschlüssig unterteilt ist,
und/oder
- der freie vertikale Abstand (**18**) zwischen übereinander liegenden Lagerflächen (**3**a, b) größer ist als die Höhe eines Trays (**2**a, b) plus die Höhe eines. Fluggerätes, insbesondere Multikopters (**4**a, b) mit angekoppeltem Tray (**2**a).

12. Lager nach einem der vorhergehenden Vorrichtungsansprüche,
**dadurch gekennzeichnet, dass**
- die Fluggeräte, insbesondere Multikopter (**4**a, b) auf der Unterseite und/oder auf der Oberseite eine Abstandsmessvorrichtung, die insbesondere berührungslos arbeitet, aufweisen,
und/oder
- die Kopplungseinrichtung (**24**) an der Unterseite des Fluggerätes, insbesondere Multikopters (4a, b), zum direkten Aufnehmen einzelner Produkte (**1**a, b) nach unten ausfahrbar und aktivierbar oder einfahrbar und deaktivierbar ist.

13. Lager nach einem der vorhergehenden Vorrichtungsansprüche,
**dadurch gekennzeichnet, dass**
die Fluggeräte einen Zentralbereich (**19**) mit den Kopplungseinrichtungen (**24**) sowie von diesem weg reichende Ausleger (**14**) aufweisen, an deren Enden sich außerhalb des Zentralbereiches (19) die Rotoren (**27**) befinden und insbesondere der Zentralbereich (**19**) von Schutzwänden zum Abhalten der Luftströmung aus dem Zentralbereich (**19**) umgeben ist.
und/oder
die Fluggeräte vier über den Umfang verteilte, beabstandete Auslegerarme (**14**) umfassen, zum dichten Heranfahren an Stützen des Lagers.

14. Lager nach einem der vorhergehenden Vorrichtungsansprüche,
**dadurch gekennzeichnet, dass**
- die Lagerfläche (**3**a, b) sich über mehrere Etagen erstreckt, die durch mehrere Schächte miteinander verbunden sind, in denen ein Multikopter (**4**a, b) vertikal fliegen kann, und/oder
- die Etagen der Lagerfläche (**3**a, b) zu mindestens einer Seite hin offen sind und daneben ausreichender Freiraum zum vertikalen Fliegen der Fluggeräte, insbesondere Multikopter (**4**a b) vorhanden ist, und/oder
- die Orientierung der Multikopter (**4**a, b) auf der Lagerfläche (**3**a, b) durch kontaktlos abzutastende Markierungen auf der Lagerfläche (**3**a, b) oder der Decke über der Lagerfläche, also der Unterseite der darüber liegenden Lagerfläche, erfolgt und die Fluggeräte, insbesondere Multikopter (**4**a, b) entsprechende Sensoren, insbesondere BarcodeLeser (**21**) aufweisen.

15. Lager nach einem der vorhergehenden Vorrichtungsansprüche,
**dadurch gekennzeichnet, dass**
- die Fluggeräte, insbesondere Multikopter (**4**a, b) mit der Zentralsteuerung drahtlos, insbesondere über WLAN, sowie zusätzlich über einen drahtlosen Notkanal, insbesondere mittels Funk oder Ultraschall, in Verbindung stehen, und/oder
- das Lager Ladestationen (**23**) für elektrische Akkus (**22**) für die Multikopter (**4**a, b) umfasst, und/oder
- die Trays (**2**a,- b) als Kupplung (**24**) an ihrer Oberseite oder Seitenwand definiert angeordnete Kupplungselemente, insbesondere Kupplungsöffnungen aufweisen, und die Kupplung (**24**') in wenigstens zwei gegenüber liegenden Stirnflächen des Trays, insbesondere in allen Stirnflächen des insbesondere rechteckigen Trays (**2**a, b), angeordnet sind.

16. Lager nach einem der vorhergehenden Vorrichtungsansprüche,
**dadurch gekennzeichnet, dass**
bei einer Lagerfläche (**3**a, b) aus mehrere Etagen übereinander die Lagerfläche (**3**a, b) aus rasterartigen, insbesondere rechteckigen, Bodenplatten (**28**) zusammengesetzt ist, die auf regelmäßig angeordneten Stützen (**29**) aufliegen und nach oben abgehoben werden können und insbesondere groß genug sind, dass durch die entstehende Öffnung ein menschlicher Bediener (**20**) in das Lager hinauf- oder hinabsteigen kann.

## Claims

1. A method for storing products (1a, b) on a storage surface (3a, b) with at least one floor with motor driven unmanned aerial vehicles wherein at least one of plural aerial vehicles is configured to simultaneously:
- automatically couple or decouple respectively at least one product (1a, b) or a tray (2a, b) that is configured for inserting one or plural products (1a, b); and
- move the at least one product or the tray along the storage surface (3a, b) on a movement path predetermined by a central control (9),
- wherein the movement paths (12a) of the aerial vehicles extend over products (1a, b) or trays (2a, b) placed on the storage surface (3a, b),
- wherein the aerial vehicles can stand still in the air and rotate in place and can fly in all directions in space,
**characterized in that**
a) in order to store products (1a, b)
- an aerial vehicle couples the product (1a,b) directly or couples a tray (2a, b) loaded with the product automatically,
- lifts off from the ground,
- flies to a storage location (7) therewith,
- deposits and decouples the product or the tray loaded with the product on the storage surface (3a)
b) for retrieving the products (1a, b) from storage,
- an aerial vehicle flies to at least one loaded tray (2a, b) or a product (1a, b) standing in a storage position (7),
- couples automatically,
- flies to a unloading station (6),
- where the product (1a, b) is retrieved from the tray (2a, b) or the directly coupled product (1, b) is decoupled.

2. The method according to claim 1,
**characterized in that**
after completing storing or retrieving the products (1a, b) from the storage the aerial vehicle flies to an idle position (13)
and/or
after completing the retrieval of the products (1 a, b) from the storage the empty tray (2a, b) is moved to a parking position and parked in the parking position.

3. The method according to claim 1 or 2,
**characterized in that**
the aerial vehicles are multi copters (4a, b) with plural rotors generating lift.

4. The method according to one of the preceding claims,
**characterized in that**
the aerial vehicles, in particular the multi copters (4a, b)
- are configured to pick up plural products (1a, b) independently from each other and adjacent to each other using a coupling device (24), in particular vacuum suction cups and the aerial vehicles are configured to sequentially pick up plural products (1a, b) when picking up the products (1a, b) directly,
- wherein the aerial vehicles are configured to couple and pick up a tray (2a) using a coupling device (24) in particular hooks (39).

5. The method according to one of the preceding claims,
**characterized in that**
- flying to another position also includes flying to another level of the storage surface (3a, b) **in that** aerial vehicles, in particular the multi copters (4a, b) climb or descend outside of the storage surfaces (3a, b) or in a vertical shaft within the storage surfaces (3a, b) into a respective level
and/or,
- the aerial vehicles, in particular the multi copters (4a, b) are wirelessly connected with a central control (9), in particular through a WLAN and as an emergency channel through radial and ultra sound and wherein the aerial vehicles advantageously receive from the central computer also data regarding the storage landscape in addition to a start position and a destination position and advantageously also data regarding a point in time for the trip and optionally a movement path (12a) to be taken.

6. The method according to one of the preceding claims,
**characterized in that**
- the aerial vehicles, in particular the multi copters (4a, b) navigate in the storage facility in particular in the storing area using markings arranged at a bottom side of a storage level (3a, b) arranged there above or at a top side of the storage level (3a, b) arranged thereunder, where the coupling and the decoupling has to be performed in order to reach an exact positon of the aerial vehicle relative to the stored product or tray,
and/or
the aerial vehicles, in particular the multi copters (4a, b) during coupling or decoupling either sit on a base of the storage surface (3a, b) with legs (13) or measure a distance from the storage surface (3a) or from the ceiling above, in particular touch free, by a distance measuring system and maintain a nominal distance automatically.

7. The method according to claim 6,
**characterized in that**
- the markings include a grid line system (16a) including grid lines (16a, b) extending in parallel at least in one direction, in particular extending at a right angle and the markings include for example bar codes (15a, b) defining individual grids that are arranged in an interior of the grid pattern or in intersection portions of the grid.

8. The method according to one of the preceding claims,
**characterized in that**
a free vertical distance between the storage surfaces (3a, b) is selected so that an aerial vehicle in particular a multi copter (4a, b) with products (1a, b) or a tray (2a, b) coupled thereunder can fly over trays (2a, b) or products (1a, b) placed in this storage level,
and/or
- all the products (1a, b), the trays (2a, b) and the aerial vehicles, in particular the multi copters (4a, b) have identifiers that are readable touch free in particular bar codes (15a, b) and respective sensors in particular identification bar code readers (21) are provided at all loading stations (5) and unloading stations (6).

9. The storage facility for products (1a, b) comprising:
- at least one storage surface (3a, b) that is physically interrupted by as few fixated obstacles as possible,
- wherein, trays (2a, b) are storable on the storage surface, wherein the trays respectively include at least one product (1a, b) or wherein the products (1a, b) are directly placeable onto the storage surface,
- motor driven independently moveable unmanned aerial vehicles that are capable to stand still in the air and rotate in place and capable to fly in all directions in space and capable to move the trays (2a, b),
- the storage facility includes at least one loading station (5) and at least one unloading station (6),
- the storage surface (3a, b) includes at least one storage position (7),
- a navigation system so that the aerial vehicles with the tray (2a, b) or the product (1a, b) can move into a predetermined storage position or loading station (5) for trays (2a, b) or unloading station (6) for trays (2a, b) on the storage surface (3a, b),
- a central control (9) which controls the plural aerial vehicles moving in the storage facility independently with respect to their movement times and movement paths,
- wherein the aerial vehicles are configured at their bottom sides to directly couple products (1a, b) independently from each other as well as a tray (2a).

10. The storage facility according to claim 9,
**characterized in that**
form locking coupling devices (24, 24') for the trays (2a, b) are provided at a bottom side of the aerial vehicles, in particular at least one fixated hook (39) protruding downward from the aerial vehicle and suspension devices are provided at the trays (2a, b), in particular upward protruding bars (41) at a corresponding position.

11. The storage facility according to one of the preceding device claims, **characterized in that**
- on the storage surface (3a, b) storage position (7a, b) are separated from each other in a form locking manner, in particular by intermediary walls (17) for depositing in particular small and light products (1a, b), in particular a largest portion of the storage surface (3a, b), however is not subdivided in a form locking manner,
and/or
- a vertical free distance (18) between storage surfaces (3a, b) arranged on top of each other is greater than a height of a tray (2a, b) plus a height of the aerial vehicle, in particular of the multi copter (4a, b) with the coupled tray (2a).

12. The storage facility according to one of the preceding device claims, **characterized in that**
- the aerial vehicles, in particular the multi copters (4a, b) include a distance measuring device on a bottom side and/or on a top side which operates in particular touch free,
and/or
- the coupling device (24) at the bottom side of the aerial vehicle, in particular of the multi copter (4a, b) is deployable in downward direction and activatable or retractable and deactivatable for directly picking up individual products (1 a, b).

13. The storage facility according to one of the preceding device claims,
**characterized in that**
the aerial vehicles include a central portion (19) with coupling devices (24) and outriggers (14) oriented away from the central portion (19) wherein rotors (27) are arranged at ends of the outriggers outside of the center portion (19) and in particular the center portion (19) is enveloped by protective walls for excluding an air flow from the center portion (19)
and/or
the aerial vehicles have four outriggers (14) that are offset from each other and distributed over a circumference for closely moving towards beams of the storage facility.

14. The storage facility according to one of the preceding device claims,
**characterized in that**
- the storage facility (3a, b) extends over plural levels which are connected with each other by plural shafts in which a multi copter (4a, b) can fly vertically and/or,
- the levels of the storage surface (3a, b) are open towards at least one side and have sufficient free space for the aerial vehicles, in particular the multi copters (4a, b) to fly vertically and/or
- an orientation of the multi copters (4a, b) on the storage surface (3a, b) is provided by markings on the storage surface (3a, b) or on a ceiling above the storage surface, thus a bottom side of a storage surface arranged there above and the aerial vehicles, in particular the multi copters (4a, b) have respective sensors, in particular bar code readers (21).

15. The storage facility according to one of the preceding device claims,
**characterized in that**
- the aerial vehicles, in particular the multi copters (4a, b) are connected with the central control wirelessly in particular by WLAN and additionally through a wireless emergency channel, in particular by radio or ultrasound, and/or
- the storage facility includes charging stations (23) for electrical accumulators (22) for the multi copters (4a, b), and/or
- the trays (2a, b) include couplings (24) at their top side or side wall that are arranged as defined coupling elements, in particular coupling openings and the couplings (24) are arranged in at least two opposite faces of the tray, in particular in all faces of the in particular rectangular tray (2a, b).

16. The storage facility according to one of the preceding device claims,
**characterized in that**
a storage surface (3a, b) including plural levels arranged on top of each other is assembled from grid shaped, in particular rectangular base plates (28) which rest on supports (29) arranged at uniform intervals wherein the base plates (28) are lift able in an upward direction and are in particular large enough so that a human operator (20) can climb up or down into the storage facility (3a, b) through an opening thus created.

## Revendications

1. Procédé d'entreposage de produits (1a, 1b) sur une surface d'entreposage (3a, 3b) d'au moins un étage avec des engins volants sans pilote entraînés par moteur, respectivement au moins un parmi plusieurs engins volants pouvant
- automatiquement accoupler ou désaccoupler de façon simultanée respectivement au moins un produit (1a, b) ou un plateau (2a, b) adapté à recevoir un ou plusieurs produits (1a, b) et à
- déplacer le produit (1a, b) ou le plateau (2a, b) en effectuant un mouvement de va et vient le long de la surface d'entreposage (3a, b) sur une trajectoire de déplacement (12a) prédéfinie par une commande centrale,
- entraîner les trajectoires de déplacement (12a) des engins volants à passer par-dessus des produits (1a, b) ou plateaux 2a, b) déposés sur la surface d'entreposage (3a, b),
- être utilisés comme engins volants pouvant rester immobiles dans l'air ou tourner sur place, ainsi que voler dans toutes les directions spatiales,
**caractérisé en ce que**
a) pour mettre des produits (1a, b) en entrepôt
- un engin volant accouple automatiquement directement le produit (1a, b) ou un plateau (2a, b) chargé du produit (1a, b) dans une station de chargement (5),
- décolle du sol,
- vole avec le produit ou le plateau vers une position d'entreposage (7),
- dépose le produit ou le plateau sur la surface d'entreposage (3a) et le désaccouple.
b) pour sortir des produits (1a, b) entreposés de l'entrepôt
- un engin volant vole vers au moins un plateau (2a, b) chargé se trouvant dans une position d'entreposage (7) ou vers un produit (1a, b),
- accouple celui-ci automatiquement,
- se dirige vers une station de déchargement (6),
- où le produit (1a, b) est enlevé du plateau (2a, b) ou le produit (1a, b) accouplé directement est désaccouplé.

2. Procédé suivant la revendication 1,
**caractérisé en ce que**
après avoir terminé la mise de produits (1a, b) en entrepôt ou la sortie de produits (1a, b) de l'entrepôt, l'engin volant se dirige vers une position d'attente (13),
et/ou
après avoir terminé la sortie de produits (1a, b) de l'entrepôt, le plateau (2a, b) vide est déplacé vers une position de stationnement (8), où il est déposé, et

3. Procédé suivant la revendication 1 ou 2,
**caractérisé en ce que**
comme engins volants sont utilisés des multicoptères (4a, b) avec plusieurs rotors générant une portance.

4. Procédé suivant une des revendications précédentes,
**caractérisé en ce que**
les engins volants, en particulier des multicoptères (4a, b),
- peuvent recevoir plusieurs produits (1a, b) indépendamment les uns des autres et les uns à côté des autres à l'aide d'un dispositif d'accouplement (24), notamment de ventouses à dépression, et **en ce que** l'engin volant peut, en cas de réception directe de produits (1a, b), recevoir plusieurs produits (1a, b) l'un après l'autre,
- ainsi qu'accoupler et recevoir un plateau (2a) à l'aide d'un dispositif d'accouplement (24), notamment de crochets (39).

5. Procédé suivant une des revendications précédentes,
**caractérisé en ce que**
- voler vers une autre position comprend également voler vers un autre étage de la surface d'entreposage (3a, b), des engins volants, notamment le multicoptère (4a, b), montant ou descendant à l'étage correspondant, à l'extérieur des surfaces d'entreposage (3a, b) ou dans un puits vertical à l'intérieur des surfaces d'entreposage (3a, b),
et/ou
- les engins volants, notamment des multicoptères (4a, b), communiquent sans fil, en particulier au moyen de WLAN et via un canal de secours, par radio ou ultrason avec une commande centrale (9) et reçoivent du processeur central, outre la position de départ et la position cible, des données relatives au moment du déplacement et, le cas échéant, à la trajectoire de déplacement (12a) à emprunter, de préférence également des données relatives au paysage de l'entrepôt.

6. Procédé suivant une des revendications précédentes,
**caractérisé en ce que**
les engins volants, notamment des multicoptères (4a), naviguent dans l'entrepôt à l'aide de marquages appliqués sur la face inférieure du niveau d'entreposage (3a, b) supérieur ou sur la face supérieure du niveau d'entreposage (3a, b) inférieur, en particulier dans la zone de mise en entrepôt, où il est nécessaire d'accoupler et de désaccoupler, pour atteindre une assiette exacte de l'engin volant par rapport au produit ou plateau déposé
et/ou
**en ce que**, lors de l'accouplement ou du désaccouplement, les engins volants, notamment des multicoptères (4a, b), reposent au moyen de pieds (13) sur le sol, à savoir la surface d'entreposage (3a, b), ou mesurent, en particulier sans contact, leur distance par rapport à la surface d'entreposage (3a) ou par rapport au plafond au-dessus de celle-ci, au moyen d'un système de mesure de distance et conservent automatiquement la distance de consigne.

7. Procédé suivant la revendication 6,
**caractérisé en ce que**
les marquages comprennent un système à lignes de trame (16a) comportant des lignes de trame (16a, b) s'étendant, au moins dans une direction, de façon parallèle, notamment en formant un angle droit entre elles, et **en ce que** les marquages servant à définir les différentes trames, par exemple des codes barres (15a, b), sont disposés à l'intérieur de la trame ou dans les zones de croisement de la trame.

8. Procédé suivant une des revendications précédentes,
**caractérisé en ce que**
l'écart vertical libre entre les surfaces d'entreposage (3a, b) est sélectionné de façon qu'un engin volant, notamment un multicoptère (4a, b), sous lequel est accouplé un produit (1a, b) ou un plateau (2a, b), puisse voler au-dessus de plateaux (2a, b) ou de produits 1a, b) déposés à cet étage d'entreposage,
et/ou
**en ce que** tous les produits (1a, b), plateaux 2a, b) et engins volants, notamment des multicoptères (4a, b), disposent d'identifications lisibles sans contact, en particulier de codes barres (15a, b), et **en ce que** des capteurs correspondants, notamment des lecteurs de codes barres d'identification (21), existent à chaque station de chargement (5) et à chaque station de déchargement (6).

9. **Entrepôt** pour des produits (1a, b), avec
- au moins une surface d'entreposage (3a, b) qui est interrompue physiquement par le moins d'obstacles fixes possible,
- sur laquelle peuvent être déposés des plateaux (2a, b), dans lesquels repose respectivement au moins un produit (1a, b) ou sur lesquels des produits 1 a, b) peuvent être déposés directement,
- des engins volants sans pilote, entraînés par moteur qui peuvent être déplacés indépendamment l'un de l'autre, rester immobiles dans l'air et tourner sur place, ainsi que voler dans toutes les directions spatiales, engins volants qui peuvent déplacer les plateaux (2a, b),
- l'entrepôt comprenant au moins une station de chargement (5) et une station de déchargement (6),
- la surface d'entreposage (3a, b) présentant au moins une position d'entreposage (7),
- un système de navigation permettant aux engins volants de se rendre avec le plateau (2a, b) ou le produit (1a, b) à une position d'entreposage (7) ou à une station de chargement (5) de plateaux (2a, b) ou à une station de déchargement (6) de plateaux (2a, b) sur la surface d'entreposage (3a, b),
- une commande centrale (9), qui commande les plusieurs engins volants simultanément en mouvement dans l'entrepôt quant à leur durée et leur trajectoire de déplacement,
- les engins volants étant capables d'accoupler directement et de tenir au niveau de leur face inférieure aussi bien des produits (1a, b) indépendamment les uns des autres, qu'un plateau (2a).

10. Entrepôt suivant la revendication 9,
**caractérisé en ce que**
pour les plateaux (2a, b), des dispositifs d'accouplement par coopération de formes (24, 24') existent sur la face inférieure des engins volants, notamment au moins un crochet fixe (39) se projetant vers le bas depuis l'engin volant, et des dispositifs de suspension existent sur les plateaux (2a, b), en particulier des étriers (41) se projetant vers le haut en une position appropriée.

11. Entrepôt suivant une des revendications précédentes,
**caractérisé en ce que**
- sur la surface d'entreposage (3a, b), des positions d'entreposage (7a, b) sont séparées l'une de l'autre par coopération de formes, notamment par des parois intermédiaires (17), pour le dépôt en particulier de petits produits (1 a, b) légers, notamment la plus grande partie de la surface d'entreposage (3a, b) n'étant toutefois pas divisée par coopération de formes,
et/ou
- **en ce que** l'écart libre vertical (18) entre des surfaces d'entreposage (3a, b) superposées est plus grand que la hauteur d'un plateau (2a, b) additionnée à la hauteur d'un engin volant, notamment d'un multicoptère (4a, b), avec un plateau (2a) accouplé.

12. Entrepôt suivant une des revendications précédentes,
**caractérisé en ce que**
- les engins volants, en particulier des multicoptères (4a, b), présentent sur leur face inférieure et/ou sur leur face supérieure un dispositif de mesure de distance, qui fonctionne en particulier sans contact,
et/ou
- le dispositif d'accouplement (24) sur la face inférieure de l'engin volant, notamment du multicoptère (4a, b), peut être déployé vers le bas et activé ou rétracté et désactivé pour recevoir directement différents produits (1a, b).

13. Entrepôt suivant une des revendications précédentes,
**caractérisé en ce que**
les engins volants présentent une zone centrale (19) avec les dispositifs d'accouplement (24), depuis lesquels s'avancent des bras (14), aux extrémités desquels et hors de la zone centrale (19) se situent les rotors (27) et **en ce qu'**en particulier la zone centrale (19) est entourée de parois de protection pour éviter qu'elle soit exposée au courant d'air,
et/ou
les engins volants comprennent quatre bras (14) répartis sur la circonférence de façon distancée les uns des autres pour s'approcher de très près de supports de l'entrepôt.

14. Entrepôt suivant une des revendications précédentes,
**caractérisé en ce que**
- la surface d'entreposage (3a, b) s'étend sur plusieurs étages reliés entre eux par plusieurs puits, dans lesquels un multicoptère (4a, b) peut voler verticalement, et/ou
- les étages de la surface d'entreposage (3a, b) sont ouverts sur au moins un côté et qu'il y a, à côté, un espace libre suffisant pour le déplacement vertical des engins volants, notamment des multicoptères (4a, b), et/ou
- l'orientation des multicoptères (4a, b) sur la surface d'entreposage (3a, b) a lieu par des marquages à balayer sans contact sur la surface d'entreposage (3a, b) ou sur le plafond au-dessus de la surface d'entreposage (3a, b), à savoir sur la face inférieure de la surface d'entreposage (3a, b) superposée et **en ce que** les engins volants, en particulier des multicoptères (4a, b), présentent des capteurs correspondants, notamment des lecteurs de codes barres (21).

15. Entrepôt suivant une des revendications précédentes,
**caractérisé en ce que**
- les engins volants, en particulier des multicoptères (4a, b), sont reliés sans fil, par l'intermédiaire de WLAN, ainsi qu'en plus via un canal d'urgence sans fil, notamment par radio ou ultrason, à la commande centrale, et/ou
- l'entrepôt comprend des stations de chargement (23) pour des batteries électriques (22) pour les multicoptères (4a, b), et/ou
- comme dispositif d'accouplement, les plateaux (2a, b) présentent sur leur face supérieure ou latérale, disposés de manière définie, des éléments d'accouplement, notamment des ouvertures d'accouplement et **en ce que** les dispositifs d'accouplement (24') sont disposés dans au moins deux faces d'extrémité opposées du plateau, en particulier dans toutes les faces d'extrémité du plateau qui est en particulier rectangulaire (2a, b).

16. Entrepôt suivant une des revendications précédentes,
**caractérisé en ce que**
en cas de surface d'entreposage (3a, b) composée de plusieurs étages superposés, celle-ci est composée de dalles de sol en forme de trame, en particulier rectangulaires (28), qui reposent sur des supports (29) disposés de façon régulière, qui peuvent être soulevées et qui sont en particulier suffisamment grandes, qu'un opérateur humain puisse monter ou descendre dans l'entrepôt à travers l'ouverture ainsi formée.
